# EUROPEAN PATENT APPLICATION

(11) **EP 4 672 062 A1**
(43) Date of publication of application: **31.12.2025**
(21) Application number: 25171912.6
(22) Date of filing: 23.04.2025
(51) Int. Cl.: G06F 21/62, G06N 3/08

(54) **GENERATIVE AI BASED USER BEHAVIOR OBFUSCATION**

(30) Priority: 28.06.2024 US 202418757618
(71) Applicant: INTEL Corporation, Santa Clara, CA 95054 (US)
(72) Inventor: ROSALES, Rafael, 82008 Unterhaching (DE); CAVALCANTI, Dave A., Portland, OR, 97229 (US); SHARMA BANJADE, Vesh Raj, Portland, OR, 97229 (US)
(74) Representative: Viering, Jentschura & Partner mbB Patent- und Rechtsanwälte

(57) **Abstract**

A device includes a memory, including a first artificial neural network; and
a second artificial neural network; and a processor, configured to implement the first artificial neural network to generate a first output based on a first input; implement the second artificial neural network to generate second output based on a second input; wherein the first input includes or represents content of a website; wherein the first output includes a content category associated with the content of the website; wherein the second input includes the content category; and wherein the second output is negatively correlated with the content category of the second input.

## Description

### Technical Field

Various aspects of this disclosure generally relate to the use of generative artificial intelligence (AI) to obfuscate user behavior in the World Wide Web (Web).

### Background

Many websites, search engines, etc., employ programs, which will be referred to herein as "trackers", to track user history on the Web. These trackers collect details of a user's engagements with the Web, and these details are used to generate a user profile. This user profile becomes a basis by which products or services are advertised to the user during subsequent interactions with the Web. That is, the user encounters ads, commercials, popups, product-placement, etc. within the user's web browser, based on the corresponding user profile.

This process has tremendous commercial value, and therefore it has become somewhat ubiquitous. This process also necessarily represents a loss of personal privacy, since it involves the generation of a profile of the user's behavior. Users may wish to keep their private browsing behavior private and may resist the generation of a commercially-available public profile about their behavior. Alternatively or additionally, users may simply place a high value on privacy and may otherwise resist common data collection practices. In any event, it may be desirable to hamper a tracker's ability to generate a user profile based on the user's browsing activity or user engagement.

Various efforts have been made to increase user privacy and/or to reduce or stymie the generation of a user profile based on browsing history or user engagement. For example, Hypertext Transfer Protocol Secure (HTTPS) and/or the user of a virtual private network (VPN) may provide an encrypted link between a user and the destination, which may increase user privacy somewhat; however, neither HTTPS nor the use of a VPN avoid the tracking of a user at a destination website. Alternatively, some browsers include an "incognito mode" that can help to navigate the Web without storing tracking artifacts such as cookies; however, tracking is still possible through techniques such as fingerprinting. Furthermore, although the "Enhanced ad privacy" feature in Google's Chrome browser may no longer use third-party cookies and provides users additional choices about the ads they see based on their recent web history, the Enhanced ad privacy feature also includes new tools that may diminish privacy, such as "Ad topics", "Site-suggested ads", and "Ad measurement"; moreover, other tracking techniques, such as fingerprinting, remain unaffected.

Of particular note, it is known to protect user privacy by injecting random traffic into users' browsing histories. The addition of random noise adds chaos in the web traffic behavior, which, in theory, increases the difficulty of building a profile from online user activity. For this technique, random pairings of words for a given search in a browser are created and refreshed at regular intervals. This technique, however, can be largely overcome because the random traffic, being random and therefore unrelated to the real traffic, can be spotted through analysis. That is, the random traffic (also referred to herein as "noise-traffic" or "noise") can be distinguished from the consistency of the real traffic by analyzing topic similarity, visit frequency, or link graph traversal. Links followed are consistent locally and match a certain statistic of browsing behavior. In contrast, searches of random pairings of words can be identified as outliers with the common factor that all random traffic initiates from a search engine (e.g. as opposed to a link). Real traffic, in contrast, typically includes a mix of searches and direct website visits.

In light of the foregoing, it is desired to create an improved system for maintaining user privacy on the Web.

### Brief Description of the Drawings

In the drawings, like reference characters generally refer to the same parts throughout the different views. The drawings are not necessarily to scale, emphasis instead generally being placed upon illustrating the exemplary principles of the disclosure. In the following description, various exemplary embodiments of the disclosure are described with reference to the following drawings, in which:
FIG. 1 depicts a conventional generation of a user profile based on a browsing record;
FIG. 2 depicts the introduction of negatively correlated search results to confuse or hinder the development of a tracking generated profile;
FIG. 3 depicts a workflow for the generation and implementation of the negatively-correlated record of FIG. 2;
FIG. 4 depicts the use of a prompt and a language model to determine relevant categories pertaining to a website to which a user navigated;
FIG. 5 depicts the use of a model to generate negatively-correlated traffic from the summary;
FIG. 6 depicts the procedure of FIG. 5, with an alternative prompt;
FIG. 7 depicts the following of links according to a human browsing pattern; and
FIG. 8 depicts a device according to an aspect of the disclosure.

### Description

The following detailed description refers to the accompanying drawings that show, by way of illustration, exemplary details and embodiments in which aspects of the present disclosure may be practiced.

The word "exemplary" is used herein to mean "serving as an example, instance, or illustration". Any embodiment or design described herein as "exemplary" is not necessarily to be construed as preferred or advantageous over other embodiments or designs.

Throughout the drawings, it should be noted that like reference numbers are used to depict the same or similar elements, features, and structures, unless otherwise noted.

The phrase "at least one" and "one or more" may be understood to include a numerical quantity greater than or equal to one (e.g., one, two, three, four, [...], etc.). The phrase "at least one of" with regard to a group of elements may be used herein to mean at least one element from the group consisting of the elements. For example, the phrase "at least one of" with regard to a group of elements may be used herein to mean a selection of: one of the listed elements, a plurality of one of the listed elements, a plurality of individual listed elements, or a plurality of a multiple of individual listed elements.

The words "plural" and "multiple" in the description and in the claims expressly refer to a quantity greater than one. Accordingly, any phrases explicitly invoking the aforementioned words (e.g., "plural [elements]", "multiple [elements]") referring to a quantity of elements expressly refers to more than one of the said elements. For instance, the phrase "a plurality" may be understood to include a numerical quantity greater than or equal to two (e.g., two, three, four, five, [...], etc.).

The phrases "group (of)", "set (of)", "collection (of)", "series (of)", "sequence (of)", "grouping (of)", etc., in the description and in the claims, if any, refer to a quantity equal to or greater than one, i.e., one or more. The terms "proper subset", "reduced subset", and "lesser subset" refer to a subset of a set that is not equal to the set, illustratively, referring to a subset of a set that contains less elements than the set.

The term "data" as used herein may be understood to include information in any suitable analog or digital form, e.g., provided as a file, a portion of a file, a set of files, a signal or stream, a portion of a signal or stream, a set of signals or streams, and the like. Further, the term "data" may also be used to mean a reference to information, e.g., in form of a pointer. The term "data", however, is not limited to the aforementioned examples and may take various forms and represent any information as understood in the art.

The terms "processor" or "controller" as, for example, used herein may be understood as any kind of technological entity that allows handling of data. The data may be handled according to one or more specific functions executed by the processor or controller. Further, a processor or controller as used herein may be understood as any kind of circuit, e.g., any kind of analog or digital circuit. A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

As used herein, "memory" is understood as a computer-readable medium (e.g., a non-transitory computer-readable medium) in which data or information can be stored for retrieval. References to "memory" included herein may thus be understood as referring to volatile or non-volatile memory, including random access memory (RAM), read-only memory (ROM), flash memory, solid-state storage, magnetic tape, hard disk drive, optical drive, 3D XPointTM, among others, or any combination thereof. Registers, shift registers, processor registers, data buffers, among others, are also embraced herein by the term memory. The term "software" refers to any type of executable instruction, including firmware.

Unless explicitly specified, the term "transmit" encompasses both direct (point-to-point) and indirect transmission (via one or more intermediary points). Similarly, the term "receive" encompasses both direct and indirect reception. Furthermore, the terms "transmit," "receive," "communicate," and other similar terms encompass both physical transmission (e.g., the transmission of radio signals) and logical transmission (e.g., the transmission of digital data over a logical software-level connection). For example, a processor or controller may transmit or receive data over a software-level connection with another processor or controller in the form of radio signals, where the physical transmission and reception is handled by radio-layer components such as RF transceivers and antennas, and the logical transmission and reception over the software-level connection is performed by the processors or controllers. The term "communicate" encompasses one or both of transmitting and receiving, i.e., unidirectional or bidirectional communication in one or both of the incoming and outgoing directions. The term "calculate" encompasses both 'direct' calculations via a mathematical expression/formula/relationship and 'indirect' calculations via lookup or hash tables and other array indexing or searching operations.

A large language model (LLM) as used herein may refer to an AI computational model, such as, for example, a model notable for its ability to perform general purpose language generation and other natural language processing tasks, like classification. The LLM may optionally utilize a transformer architecture, which may be particularly well-suited for generation of content based on natural language text. An LLM as used herein may include any general-purpose LLM, such as a commercially available or open source LLM used for general-purpose tasks; a general-purpose LLM that has been fine tuned for a more specific purpose, such as categorization or identification of content that is negatively-correlated with content as described herein; or an LLM that is specifically trained for the tasks as described herein.

A small language model (SLM) may be understood as a subset of the AI models available for natural language processing and may be characterized by its comparatively compact architecture compared to LLMs, thereby requiring reduced computational power. An SLM may be trained on a more restricted or focused data set and may thereby be tailored to unique needs of a specific client or task. An SLM as used herein may be a commercially available SLM, an open source SLM, a general-purpose SLM, a fine tuned version of a general-purpose SLM, or an SLM that is specifically trained for the tasks described herein. It is noted that no clear line of demarcation may exist between an LLM and in SLM, and therefore these terms as used herein are intended to be utilized with a degree of flexibility such that the use of the term LLM does not exclude an SLM and vice versa.

Whether an LLM or an SLM, the model may be structured as an artificial neural network. The artificial neural network may include an input layer, which may be configured to receive an input to the artificial neural network; an output layer, which may be configured to output a result of the calculations of the artificial neural network; and one or more hidden layers between the input layer and the output layer. The one or more hidden layers may each include a plurality of nodes, and the nodes of any one hidden layer may be connected to each node of an adjacent hidden layer. The connections between layers may be weighted with a particularized weight.

User privacy may be improved with an in-device semantic analysis of browser traffic behavior, which may then be used to create fake traffic that resembles human-like traffic patterns and that can be specifically tuned to mask all or a set of potential identity features, such as economic power, societal level, etc. The privacy protection strategy disclosed herein allows users to select one or more personality features that the users would like to keep secret, while, at the same time, permitting the users to obtain advertisements for one or more particular categories with opt-in features. For example, users might find it acceptable share their interest in cars so that they may receive advertisements for automobiles, but the same users may be unwilling to reveal information about their financial status or dating preferences. The principles and methods disclosed herein permit obfuscation of user browsing history according to selected categories, such that it becomes difficult or impossible to generate meaningful user profile relative to those selected categories.

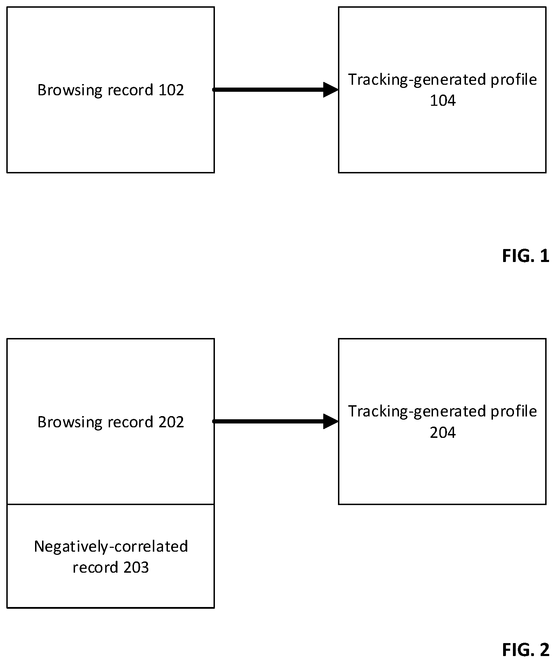

For context, FIG. 1 depicts a conventional generation of a user profile based on a browsing record. In this figure, a user engages in web browsing which itself generates a browsing record 102, which is a history of websites that are visited by the user, links clicked on by the user, etc. One or more tracking websites or tracking programs may intercept or obtain data from the user-visited websites to generate this browsing record. This may be achieved, for example, through cookies installed on a browser, through permissions of a browser to share content with one or more additional sites, through collection of data at one or more websites that are visited by the user, through interception of packets sent to and from the user's computing device, or otherwise. Over time, a user's visits to websites, or data representing these user visits, accumulate and form the basis of the user browsing record 104. The user browsing record 104 may be stored within a tracking program, at a tracking website, at any external website, or may even be part of the user's browser. Based on the information in the browsing record 102, a tracking software may generate a profile of the user 104. The profile 104 may include, for example, demographic information of the user and/or commercial information of the user, which may generally be organized into categories. Such categories are largely unstandardized and may vary widely. The principles and method disclosed herein can be used on virtually any category, regardless of the context; however, generally, and based on the need for commercial viability in the categories, the categories may, without limitation, be generally understood to relate to any of the user's interests, age, economic status, body type, political identities, dating preferences, or the like.

FIG. 2 depicts the introduction of negatively correlated search results to confuse or hinder the development of a tracking-generated user profile. That is, this figure includes a browsing record 202, which corresponds to browsing record 102. In addition, using the principles and methods disclosed herein, a record of searches (e.g. browsing), otherwise described as a negatively-correlated record 203 that is negatively correlated with records from the browsing record 202 is generated. This results in the tracking-generated profile 204 being generated based on records from each of the browsing record 202 and the negatively-correlated record 203. Because the negatively-correlated record 203 includes records that are negatively correlated with the records in the browsing record 202, no clear indication of corresponding profile categories can be generated within the tracking-generated profile 204. That is, by introducing negatively-correlated search or browsing results, categories associated with the user profile (e.g., Interests, age, economic status, body type, political identities, or otherwise) can be obfuscated, thereby preventing an accurate profile from being generated.

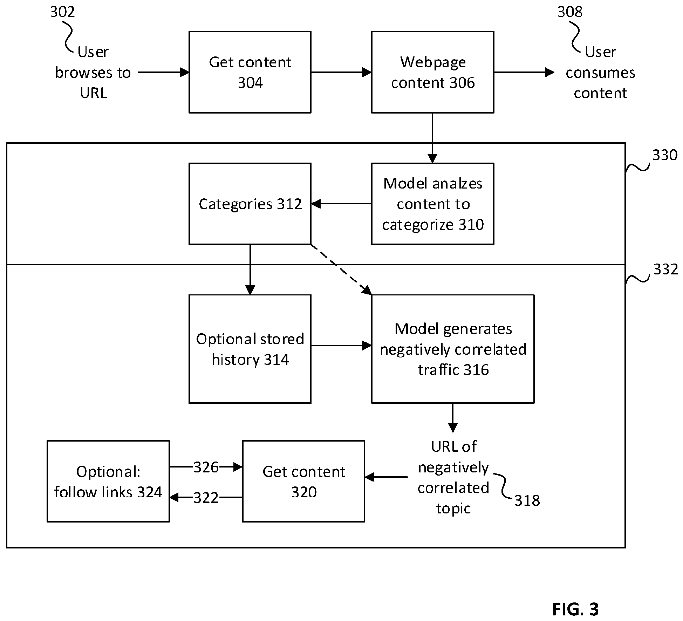

FIG. 3 depicts a workflow for the generation and implementation of the negatively-correlated record 203 of FIG. 2. In this figure, a user utilizes a browser to obtain content at a site pointed to by a URL (depicted herein as "user browses to URL" 302). The user's computing device obtains the corresponding web content at a website pointed to by the URL (depicted as "get content" 304). The content received at 304 is displayed, such as in the user's browser (depicted as "webpage content" 306). In a normal browsing session, the user may continue to consume the webpage content (depicted as "user consumes content" 308).

An AI model (e.g. an LLM or an SLM) receives the webpage content from 306 and analyzes the content to determine various categories that may be associated with a user profile (depicted as "model analyzes content to categorize" 310). In this manner, the model may be programmed with, may generally be aware of, or may be capable of determining one or more categories for a user profile that may be associated with the webpage content. The model may be a model that is trained or fine-tuned specifically for this task. In a first configuration, this model may be a separate model that fulfills only this task. In that configuration, the model may be given only the webpage content 306, and it may generate a list of categories 312 that correspond with the website content without further prompting 306. In a second, alternative configuration, the model may be a general-purpose model that may be instructed to generate the categories 312 based on the webpage content 306, such as with a prompt (not pictured).

For example, a user navigating to a website about a specific rock band is likely to be a user with an interest in music, and more particularly with an interest in the music of the particular rock band. In step 310, the model may analyze the webpage content to determine at step 312 one or more categories (e.g. music, bands, rock) that correspond to the webpage content that was analyzed. This may take the form of a single category, such as:

| | |
|---|---|
| Category | Music |

or

| | |
|---|---|
| Category | Rock music |

or

| | |
|---|---|
| Category | [INSERT BAND NAME] |

Alternative, the category may be in the form of category and subcategory, such as, for example:

| | | | |
|---|---|---|---|
| Category: | Interests | Subcategory: | Rock Music |

The exact manner of structuring the data is of less importance. The category formation may essentially mimic or mirror the category formation believed to be collected or collectable with respect to the user. Alternatively, the category formation may be generalized or created in a standardized manner so as to be widely applicable to a variety of circumstances. The category formation may be left to the model, programmed into the mode, or may be specified by a prompt to the model.

As a further example, if a user navigates to a website about the Miami Dolphins in step 306, the model may analyze the website content in step 310, and the model may determine in step 312 and from the website content the relevant categories of:

| | |
|---|---|
| Category | Sports |

or the category and subcategory formation of:

| | | | |
|---|---|---|---|
| Category: | Interests | Subcategory: | Sports |

The category creation may have any number of abstraction levels, such as illustrated by the following:

| | | | | |
|---|---|---|---|---|
| Category: | Interests: | | | |
| | Subcategory: | Sports | | |
| | | Sub-subcategory: | American Football | |
| | | | Sub-sub-subcategory | Miami Dolphins |

As yet another example, if a user navigates to a website containing listings for high-end real estate in step 306, the model in step 310 may analyze the content of the website and determine in step 312 the categories of interest::real estate, income::high, homeowner::yes.

Any categories or data generated in step 312 may optionally be stored in a history 314. Storing the derived categories may offer several benefits, which may include, for example, the ability to generate negatively-correlated traffic at times temporarily removed from the browsing of the content in step 306. That is, human browsing behavior may be more closely approximated with a stored history. It is conceivable, for example, that if a given browsing activity is always immediately followed by browsing a website in an opposite category, it may be possible to then filter out the negatively-correlated websites from the intended websites. In contrast, if using stored content, the negatively-correlated sites can be visited minutes, hours, or days after visiting desired content. This may complicate efforts to differentiate between a user-initiated browsing from a model-initiated browsing of a negatively-correlated side. On the other hand, even local storing of the user history at step 314 represents at least some form of diminished privacy, and therefore it may be made optional.

In step 316 a model (a second model, or optionally the same model as in 310) generates negatively correlated traffic. This model may generate the negatively-correlated traffic based on the categories as determined in step 312, based on the stored history in step 314, or any combination of the two. The negatively correlated traffic may correspond generally to a category that is negatively correlated with a category determined in step 312. With respect to the rock band example above, negatively correlated traffic may be traffic that is negatively correlated with an interest in music (e.g., financial updates, sports, etc.), or moving down one abstraction level, traffic that is negatively correlated with rock music (e.g. classical music, country music, etc.). With regard to the Miami Dolphins example, negatively correlated traffic may be traffic that is negatively correlated with sports (e.g. traffic associated with the visual arts, traffic associated with cooking, etc.), or an abstraction level lower, traffic that is negatively correlated with American football (e.g. traffic related to tennis, traffic related to soccer, traffic related to swimming, etc.), or an abstraction level lower still, traffic that is negatively correlated with the Miami Dolphins (e.g. traffic associated with the Green Bay Packers or the Carolina Panthers). The specificity (e.g., the abstraction level of the negatively-correlated traffic generation) may be determined by the user, such as by permitting the user to select one or more categories for which protection from profile generation or anonymity is desired.

After having determined the negative correlations, the model determines one or more URLs associated with the negative correlations (e.g. the URL for the Chicago Symphony Orchestra (related to classical music), the URL for a pottery school (related to the visual arts), or the URL for the Green Bay Packers. It is noted that current models are generally capable of generating such negatively-correlated traffic suggestions, even if the models themselves are not "aware" of the particular URLs. That is, a model may be able to determine one or more negatively-correlated categories, and the model may provide a URL of which it is aware, or it may obtain a URL from a search of the Internet based on a negatively-correlated category.

Once one or more URLs for one or more negatively-correlated categories are determined, the user's computing device may get the content 320 associated with those URLs. In many instances, it may be preferable for the content not to actually be displayed on the user's computing device, since the negatively-correlated content is ostensibly content in which the user is not interested. Thus, the gathering of the content for the negatively-correlated URL may happen in the background, and such a manner that the user is not aware. The content may optionally be sent 322 to a model 324, which may an independent model or the same model as in either 310 or 316. The model in 324 may be configured to determine one or more links within the negatively-correlated content to follow, so as to generate a more human-appearing browsing pattern. Should any of the links be selected in 324, that selection may be transmitted to the browser 326, and the user's computing device, utilizing the browser, will get the new content 320. In this manner, a user's web traffic may be analyzed to determine categories associated with that web traffic, to determine negatively associated categories or characteristics, to obtain web content associated with the negatively-correlated categories, and optionally to follow links on the web content associated with the negatively-correlated categories.

The principles and methods disclosed herein may improve user experience of internet users by confusing tracking services as to the user's actions, thereby preserving the user's privacy. This may be achieved by injecting traffic behavior that is negatively correlated (as opposed to being random) to the user's actual behavior. With respect to the examples provided above, a tracker attempting to generate a user profile may be aware of a user's search for American football, followed by the negatively-correlated search for tennis or soccer. In this manner, the tracker may be able to determine an interest in sports, but would not be able to determine that the user is specifically interested in American football.

The model or models used herein may be executed locally to analyze the web content that a person visits. In an alternative configuration, it may be possible or desirable for the models to be executed remotely, such as in a server, although this would be associated with a loss of privacy, since this would require data about the user (e.g., data that the user otherwise wishes to protect) be delivered to, and likely saved by, the remote model.

For example, the retrieved content may then be summarized in a set of features and stored for a specific period of time in order to enable a second model (e.g., an LLM or an SLM) to generate website traffic requests that are negatively correlated to the user's historic behavior. This may further include an option for the user to select identity features that should be kept private. In this manner, the LLM may generate traffic positively correlated to a user's interests but negatively correlated to the selected mask features.

The model (e.g., the LLM or SLM) may be configured to analyze the web page content received. That is, when a user visits a URL and the corresponding content is fetched, this content may be input into an LLM to analyze and summarize the content. The model may be configured to extract relevant content features that could be used by third parties to create a profile of the user. This information may be aggregated to enable the generation of negatively correlated traffic. An LLM may be instructed to suggest a URL of a webpage that matches certain features but that is different with respect to other features, such as according to preference. The suggested URL may be sent as a request to fetch the content, and the content may either be ignored (e.g. not displayed) or used by the LLM to traverse a link graph and imitate real user behavior, thereby further complicating the identification of "real" traffic from the additional, negatively-correlated noise. With respect to the content being ignored or not displayed, this may be understood as the browser omitting displaying of the content. Using this strategy, the LLM may select links based on a human-like decision processes, as compared to, for example, random clicks.

As an example, if a user visits the official website for an automobile manufacturer, and if the user desires to receive ads for cars, but the user does not want to reveal the user's economic status (e.g., the user desires that any tracking profiles of the user do not reflect, or do not accurately reflect, economic status), a model may generate traffic for content related to cars (e.g., inspired from the user's traffic history) but with enforced diversity on the cost of the cars. As a concrete example, if the user often visits websites for premium luxury cars, the model may create traffic for medium-budget or low-budget cars. In this case, the model may generate a traffic request for information about an economy-class vehicle.

If the person wants to protect as many identity features as possible, the model may generate traffic that erases any correlation of the user's behavior to such features by enforcing diversity in all dimensions. This may include, for example, the model generating requests for different topics, different content categories (news, entertainment, shopping, etc.), different segments (premium, low budget, etc.), the country of origin of a product, time of request, or otherwise.

A model is capable of summarizing and understanding the semantics of text with an extraordinary precision and generalization, which allows the model to apply the semantics to any kind of traffic behavior. This greatly improves the response, as compared to an algorithm-based approach, in which specific websites would need to be programmed and updated on a regular basis. The known hallucination limitations of LLMs do not play a significant role.

The model-based approach permits continuous operation of inference workloads at low power. The hardware features described herein enable the providing of new differentiation capabilities in the client device. The principles and methods described herein may be integrated into a client device platform optimized to run local SLM or LLM to improve the privacy of users. Although a cloud solution is conceivable, local implementation may be preferable to a cloud implementation in certain circumstances, as any cloud solution may be less suitable in certain implementations, such as due to privacy concerns.

The model may be configured to obtain the rendered web page content from a website visited by the user. The web page content received from of a user request may be input to a local model that may be running or operable on the client device. Although a number of procedures of obtaining user-sought content are conceivable, one workable approach may be to utilize one or more browser or app plug-ins, which may permit the underlying device to obtain this content for encrypted traffic, such as from https.

Thereafter, a model instance may be dedicated to analyzing each visited website and to producing a summary of the content. Generating the summary may include breaking down or categorizing the content into a set of content features that characterizes the content by a set of discrete features. These features can be used to identify personal traits and preferences and may be then used to generate traffic that changes some or all of them.

In the following, and an example of potential content features to be extracted is provided. It is noted that these categories are provided for illustrative purposes only and are not intended to be limiting.

| | |
|---|---|
| Topic: | General id {Main keyword, Title of webpage} |
| Category: | Classification {entertainment, news, social media, business, shopping} |
| Segment: | Economic {luxury, high, medium, budget} |
| Country: | Content country of origin {US, GER, ... } |
| Time: | Time stamp of visit [DATE, HOUR] |

To extract these features a specific model prompt may be defined and used for the content analysis. Although great variety in the specific prompt used may be conceivable, one example of such a suitable prompt may be as follows: "Describe in a single statement of around 30 words the following webpage: WEBPAGE_CONTENT, and provide the following information with a single keyword for each of the following items in this list: [topic, category, segment, country of origin], where 'category' represents the following classification: [entertainment, news, social media, business, shopping], and 'segment' represents the economic aspect like: [high, middle, low]."

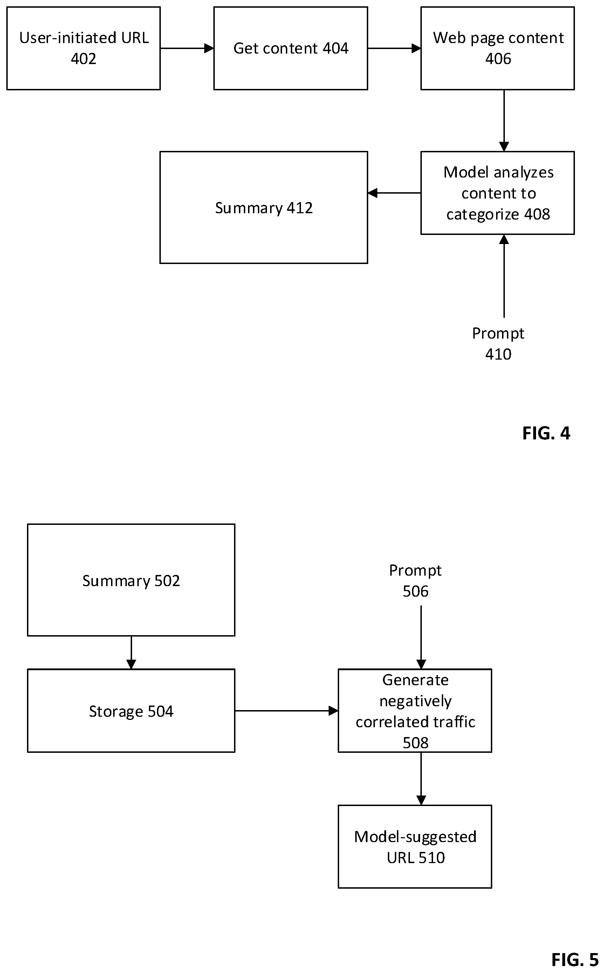

FIG. 4 depicts the use of a prompt and a language model to determine relevant categories pertaining to a website to which a user navigated. In the following, the example of a user navigating to a high-end automobile manufacturer will be used. In step 402, the user enters the URL into the user's computing device. For the sake of this example, this may be a high-end automobile manufacturer. The user's computing device obtains the content 404 from a server corresponding to the URL. The corresponding content may be displayed on the user's computing device at step 406. At step 408, a model (and LLM, and SLM) is provided with the URL and a prompt 410, instructing the model to determine a summary of the content and keywords from a variety of topics. Of course, the prompt 410 may be stylized in a number of configurations, but one exemplary implementation of the prompt may be as follows: "describe it in a single statement of around three hundred words what page this is: [URL] and provide the following information with a single keyword for each of the following items in this list: [topic, category, segment, country of origin], where 'category' represents the following classification: [entertainment, news, social media, business, shopping] and 'segment' represents the economic aspect, such as: [high, middle, low]." Using the prompt 410 and the webpage content 406, the model analyzes the content 408 and generates an output 412 which is a summary as instructed by the prompt 410. Turning to the specifics of the high-end automobile manufacturer, the webpage content 406 for the high-end automobile manufacturer may be given to the model along with prompt 410, and the model analyzes same at step 408 to generate a summary 412. The summary may include, for example, that the website is the official website for a particular luxury automobile manufacturer and is associated with the following categories: topic:: name of manufacturer, category:: business, segment:: high, country of origin:: Germany, time::[current time inserted here].

The generated summary may then optionally be stored in a local database of recent history, which may enable a second model to create traffic that differs from this behavior in a controlled way. Alternatively, the content may not be stored; instead, the model may be instructed to generate an immediate traffic negatively-correlated traffic request to avoid a potential attack to the internal database securely stored. The benefit of storing the history is that it would allow the model to produce a more sophisticated generation of fake requests, based on patterns of browsing. The end user may make the decision on which approach to use.

A model may use the summary of a webpage visit to suggest a URL to a page that is different in content according to a given heuristic. This heuristic can be parameterized to make all identity features private, or let the user select which features to hide. In this manner, the user may be given an opportunity to select one or more categories or parameters which the user desires to keep private (e.g., to prevent a tracker from building a meaningful profile about these one or more categories or parameters) while permitting one or more (or optionally no) categories or parameters to be used by a tracker for profile generation.

FIG. 5 depicts the use of a model to generate negatively-correlated traffic from the summary. In this figure, the summary 502, which corresponds to the summary 412 in FIG. 4, may be given to the model directly or may alternatively be stored in a storage 504, from which the model obtains the summary. Using a prompt 506, and the summary 502, the model may be instructed to generate negatively correlated traffic 508. The model may output a model suggested URL 510 which is negatively-correlated with information in the summary 502.

As with previous prompts, the prompt may vary substantially depending on the implementation but may generally ask for the generation of negatively-correlated traffic based on the summary. A sample, exemplary prompt is as follows: "give a URL for a website that is as opposite as possible in the segment dimension but equal to the topic dimension to the website content summarized as; [SUMMARY 502], where single "category single" represents the following classification: [entertainment, news, social media, business, shopping], and single "segment single" represents the economic aspect such as: [high, middle, low]".

A sample, exemplary output at step 510 may be as follows: "here is a URL for a webpage that is as opposite as possible to the webpage content summarized as [high-end German vehicle manufacturer]: https://www.adoptapet.com/ this webpage is about adopting pets and finding homes for animals in need which is a completely different topic and category from luxury cars and business."

The following is an example of a prompt that generates a traffic request that only partially different from a user-visit to a website for a luxury vehicle. That is, were a user to visit a website for a luxury vehicle, it may be desired to generate a noise-request for a vehicle (even a luxury vehicle), but with a different economic segment. This may, for example, originate from a user preference to hide the user's economic status, but the user's willingness to disclose an interest in vehicles. The prompt can be refined to produce only the suggested URL without any explanation. We use this example to illustrate the selection rationale.

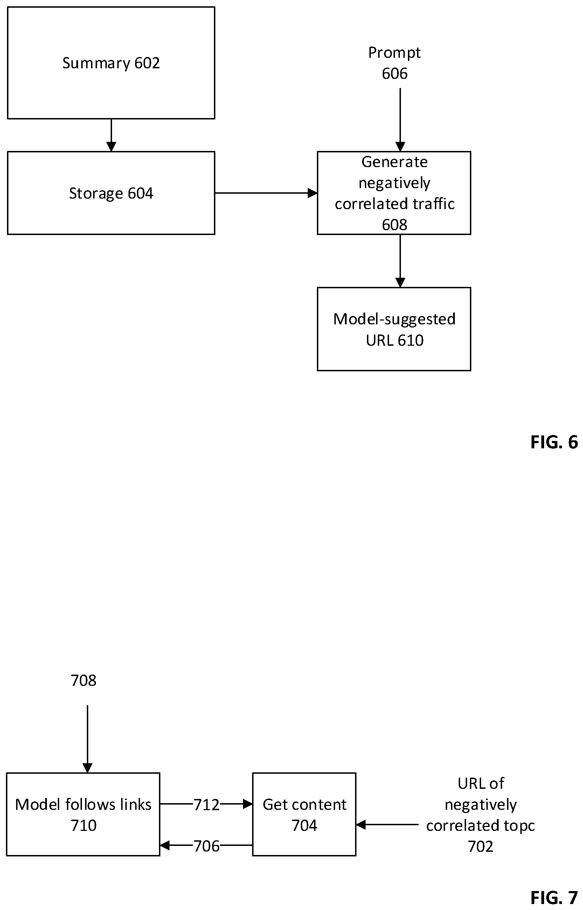

FIG. 6 depicts the same procedure as in FIG. 5, but in which the example is tailored slightly to indicate the generation of web traffic that is negatively correlated with some categories and positively correlated with other categories. That is, in FIG. 6, the summary 602 (which corresponds to the summary 502 in FIG. 5) may be provided directly to the model or may be stored in a storage 604 from which the model is able to receive the summary 602. The model is given a prompt 606, and based on the prompt 606 and the summary 602, the model generates negatively correlated traffic 608. The output is a model suggested URL 610. Using the same summary related to a high-end German vehicle manufacturer with category:: business, segment:: high, country of origin:: Germany, and time:: [enter current time], a sample alternative prompt may be as follows: "give a URL for a webpage that is as opposite as possible in the segment dimension but equal in the topic dimension to the webpage content summarized as: [SUMMARY], where 'category' represents the following classification, [entertainment, news, social media, business, shopping], and 'segment' represents the economic aspect like: [high, middle, low].

A sample, exemplary output at step 610 may be as follows: "here is a URL for a webpage that is opposite in the segment dimension but equal in the topic dimension to the webpage content summarized as single 'this page is the official website of [high-end vehicle manufacturer], a luxury car manufacturer in Germany: topic:: [high-end vehicle manufacturer], category:: shopping, segment:: low, country of origin:: China."

To imitate the generation of fake traffic in a more realistic fashion, a third instance of model-inference can traverse a set of links of a selected URL. In this way, the generated traffic may be much harder to be identified as an outlier in comparison to the real traffic of a person. FIG. 7 illustrates how an LLM can decide which link in the content to follow according to how a human might select this link based on a basic understanding of human behavior that LLMs possess. In this figure, the URL of the negatively correlated topic 702 is provided to the user's computing device which then obtains the content 704 corresponding to the URL. The content is transmitted 706 two a model which then follows links of the content 710, such as based on prompt 708. As with the other prompts, the prompt 708 may vary significantly depending on the implementation, but a sample, exemplary prompt 708 is as follows: "select a link from this webpage that a human would likely click on based on the human's interest expressed in the content of this webpage." The selected link is then sent 712 to the user's computing device, where the content is obtained 704. In this manner, links from the negatively-correlated website are activated, and corresponding content is obtained, thereby generating a pattern that more closely corresponds with human browsing patterns. These steps can be repeated with a random amount of follow-up links indicated by a slightly more complex prompt.

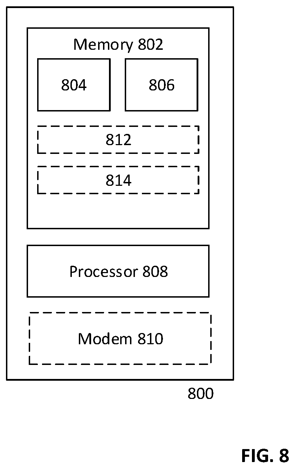

FIG. 8 depicts a device 800 according to an aspect of the disclosure. The device includes a memory 802, including a first artificial neural network 804, and a second artificial neural network 806. The device includes a processor 808. The processor 808 is configured to implement the first artificial neural network 804 to generate a first output based on a first input; and implement the second artificial neural network 806 to generate second output based on a second input. In this manner, the first input may include or represent content of a website. The first output may include a content category associated with the content of the website. The second input may include the content category. The second output may be negatively correlated with the content category of the second input.

The processor 808 may be further configured to cause a modem 810 to send a request for website content from an address corresponding to the second output. Alternatively, this may be understood as the processor causing the sending of the request for website content, without necessarily being limited by a modem. That is, the processor may be configured to cause the website content to be sent in any feasible manner. In this manner, the device 800 may optionally include the modem 810. The processor 808 may be optionally configured to not display in a browser the website content from the address corresponding to the second output. In this manner, the website content may be first website content; and the processor 808 may be further configured to cause the modem 810 to send a request for second website content that corresponds to a link within the first website content. The first website content may include a plurality of links; and the processor 808 may be further configured to select the link from the plurality of links based on a content category of the second output.

The second output may be a uniform resource locator (URL) that points to a website whose content is negatively correlated with the content category of the second input. The device 800 may be optionally configured to operate according to a predefined duration, such that the processor 808 is configured to cause the modem 810 to send the request for the website content following expiration of the predefined duration.

The memory 802 may optionally further contain data 812 representing a user search practice. In this manner, the processor may be configured to cause the modem 810 to send the request for the website content in accordance with the user search practice. The first input may include an instruction to categorize the content of the website as the first output, based on any, or any combination of, topic, category, segment, country, or time. The first output may further include a value or qualifier associated with the content category; and the second output that is negatively correlated with the content category may include the second output being negatively correlated with the value or qualifier.

The memory may further include a user-specified privacy category 814, stored in the memory. In this manner, first output may include a plurality of content categories associated with the content of the website and the processor 808 may be configured to select a content category of the plurality of content categories and to use the selected content category as the second input.

. One or both of the first artificial neural network 804 or the second artificial neural network 806 may be a large language model (LLM). Alternatively or additionally, at least one of the first artificial neural network 804 or the second artificial neural network 806 may be a small language model.

The first input may further include an instruction (e.g., a prompt) to determine a content category based on contents of the website. Similarly, the second input may further include an instruction (e.g., a prompt) to provide one or more websites that are negatively associated with the content category associated with the content of the website.

The principles and methods disclosed herein may be implemented by a means for browsing privacy. This means may include a storage means, on which may be stored a first artificial neural network; and a second artificial neural network. The means for browsing privacy may include a processing means for implementing the first artificial neural network to generate a first output based on a first input; and implementing the second artificial neural network to generate second output based on a second input. In this manner, the first input may comprise or represent content of a website. The first output may comprise a content category associated with the content of the website. The second input may comprise the content category. The second output may be negatively correlated with the content category of the second input.

This means for browsing privacy may be such that the processing means is further for sending of a request for website content from an address corresponding to the second output.

Further aspects of the invention will be described by way of example:
In Example 1, a device including a memory, including a first artificial neural network; and a second artificial neural network; and a processor, configured to implement the first artificial neural network to generate a first output based on a first input; implement the second artificial neural network to generate second output based on a second input; wherein the first input includes or represents content of a website; wherein the first output includes a content category associated with the content of the website; wherein the second input includes the content category; and wherein the second output is negatively correlated with the content category of the second input.
In Example 2, the device of Example 1, wherein the processor is further configured to cause a modem to send a request for website content from an address corresponding to the second output.
In Example 3, the device of Example 2, wherein the processor is configured to not display in a browser the website content from the address corresponding to the second output.
In Example 4, the device of Example 2 or 3, wherein the website content is first website content; and wherein the processor is further configured to cause the modem to send a request for second website content that corresponds to a link within the first website content.
In Example 5, the device of Example 4, wherein the first website content includes a plurality of links; and wherein the processor is further configured to select the link from the plurality of links based on a content category of the second output.
In Example 6, the device of Example 1, wherein the second output is a uniform resource locator (URL) that points to a website whose content is negatively correlated with the content category of the second input.
In Example 7, the device of any one of Examples 2 to 6, further including a predefined duration; and wherein the processor is configured to cause the modem to send the request for the website content following expiration of the predefined duration.
In Example 8, the device of any one of Examples 2 to 7, wherein the memory further contains data representing a user search practice, wherein the processor is configured to cause the modem to send the request for the website content in accordance with the user search practice.
In Example 9, the device of Example 1 or 8, wherein the first input includes an instruction to categorize the content of the website as the first output, based on any, or any combination of, topic, category, segment, country, or time.
In Example 10, the device of Example 1 or 9, wherein the first output further includes a value or qualifier associated with the content category; and wherein the second output being negatively correlated with the content category includes the second output being negatively correlated with the value or qualifier.
In Example 11, the device of any one of Examples 1 to 10, wherein the memory further includes a user-specified privacy category; wherein the first output includes a plurality of content categories associated with the content of the website; and wherein the processor is configured to select a content category of the plurality of content categories and to use the selected content category as the second input.
In Example 12, the device of any one of Examples 1 to 11, wherein at least one of the first artificial neural network or the second artificial neural network is a large language model.
In Example 13, the device of any one of Examples 1 to 12, wherein at least one of the first artificial neural network or the second artificial neural network is a small language model.
In Example 14, the device of any one of Examples 1 to 13, wherein the first input further includes an instruction to determine a content category based on contents of the website.
In Example 15, the device of any one of Examples 1 to 14, wherein the second input further includes an instruction to provide one or more websites that are negatively associated with the content category associated with the content of the website.
In Example 16, a non-transitory computer readable medium, including instructions which, if executed by a process, cause the processor to: implement a first artificial neural network to generate a first output based on a first input; implement a second artificial neural network to generate second output based on a second input; wherein the first input includes or represents content of a website; wherein the first output includes a content category associated with the content of the website; wherein the second input includes the content category; and wherein the second output is negatively correlated with the content category of the second input.
In Example 17, the non-transitory computer readable medium of Example 16, wherein the instructions are further configured to cause the processor to cause a modem to send a request for website content from an address corresponding to the second output.
In Example 18, the non-transitory computer readable medium of Example 17, wherein the instructions are further configured to cause the processor to not display in a browser the website content from the address corresponding to the second output.
In Example 19, the non-transitory computer readable medium of Example 17 or 18, wherein the website content is first website content; and wherein the instructions are further configured to cause the processor to cause the modem to send a request for second website content that corresponds to a link within the first website content.
In Example 20, the non-transitory computer readable medium of Example 19, wherein the first website content includes a plurality of links; and wherein the instructions are further configured to cause the processor to select the link from the plurality of links based on a content category of the second output.
In Example 21, the non-transitory computer readable medium of Example 16, wherein the second output is a uniform resource locator (URL) that points to a website whose content is negatively correlated with the content category of the second input.
In Example 22, the non-transitory computer readable medium of any one of Examples 17 to 21, further including a predefined duration; and wherein the instructions are further configured to cause the processor to cause the modem to send the request for the website content following expiration of the predefined duration.
In Example 23, the non-transitory computer readable medium of any one of Examples 17 to 22, wherein the memory further contains data representing a user search practice, wherein the instructions are further configured to cause the processor to cause the modem to send the request for the website content in accordance with the user search practice.
In Example 24, the non-transitory computer readable medium of Example 16 or 23, wherein the first input includes an instruction to categorize the content of the website as the first output, based on any, or any combination of, topic, category, segment, country, or time.
In Example 25, the non-transitory computer readable medium of Example 16 or 24, wherein the first output further includes a value or qualifier associated with the content category; and wherein the second output being negatively correlated with the content category includes the second output being negatively correlated with the value or qualifier.
In Example 26, the non-transitory computer readable medium of any one of Examples 16 to 25, further includes a user-specified privacy category; wherein the first output includes a plurality of content categories associated with the content of the website; and wherein the instructions are further configured to cause the processor to select a content category of the plurality of content categories and to use the selected content category as the second input.
In Example 27, the non-transitory computer readable medium of any one of Examples 16 to 26, wherein at least one of the first artificial neural network or the second artificial neural network is a large language model.
In Example 28, the non-transitory computer readable medium of any one of Examples 16 to 27, wherein at least one of the first artificial neural network or the second artificial neural network is a small language model.
In Example 29, the non-transitory computer readable medium of any one of Examples 16 to 28, wherein the first input further includes an instruction to determine a content category based on contents of the website.
In Example 30, the non-transitory computer readable medium of any one of Examples 16 to 29, wherein the second input further includes an instruction to provide one or more websites that are negatively associated with the content category associated with the content of the website.
In Example 31, a method including: implementing a first artificial neural network to generate a first output based on a first input; implementing a second artificial neural network to generate second output based on a second input; wherein the first input includes or represents content of a website; wherein the first output includes a content category associated with the content of the website; wherein the second input includes the content category; and wherein the second output is negatively correlated with the content category of the second input.
In Example 32, the method of Example 31, further including causing a modem to send a request for website content from an address corresponding to the second output.
In Example 33, the method of Example 32, further including not displaying in a browser the website content from the address corresponding to the second output.
In Example 34, the method of Example 32 or 33, wherein the website content is first website content; and further including causing the modem to send a request for second website content that corresponds to a link within the first website content.
In Example 35, the method of Example 34, wherein the first website content includes a plurality of links; and further including selecting the link from the plurality of links based on a content category of the second output.
In Example 36, the method of Example 31, wherein the second output is a uniform resource locator (URL) that points to a website whose content is negatively correlated with the content category of the second input.
In Example 37, the method of any one of Examples 32 to 36, further including a predefined duration; and causing the modem to send the request for the website content following expiration of the predefined duration.
In Example 38, the method of any one of Examples 32 to 37, further including causing the modem to send a request for the website content in accordance with a user search practice.
In Example 39, the method of Example 31 or 38, wherein the first input includes an instruction to categorize the content of the website as the first output, based on any, or any combination of, topic, category, segment, country, or time.
In Example 40, the method of Example 31 or 39, wherein the first output further includes a value or qualifier associated with the content category; and wherein the second output being negatively correlated with the content category includes the second output being negatively correlated with the value or qualifier.
In Example 41, the method of any one of Examples 31 to 40, wherein the first output includes a plurality of content categories associated with the content of the website; and further including selecting a content category of the plurality of content categories and using a selected content category as the second input.
In Example 42, the method of any one of Examples 31 to 41, wherein at least one of the first artificial neural network or the second artificial neural network is a large language model.
In Example 43, the method of any one of Examples 31 to 42, wherein at least one of the first artificial neural network or the second artificial neural network is a small language model.
In Example 44, the method of any one of Examples 31 to 43, wherein the first input further includes an instruction to determine a content category based on contents of the website.
In Example 45, the method of any one of Examples 31 to 44, wherein the second input further includes an instruction to provide one or more websites that are negatively associated with the content category associated with the content of the website.

While the above descriptions and connected figures may depict components as separate elements, skilled persons will appreciate the various possibilities to combine or integrate discrete elements into a single element. Such may include combining two or more circuits for form a single circuit, mounting two or more circuits onto a common chip or chassis to form an integrated element, executing discrete software components on a common processor core, etc. Conversely, skilled persons will recognize the possibility to separate a single element into two or more discrete elements, such as splitting a single circuit into two or more separate circuits, separating a chip or chassis into discrete elements originally provided thereon, separating a software component into two or more sections and executing each on a separate processor core, etc.

It is appreciated that implementations of methods detailed herein are demonstrative in nature, and are thus understood as capable of being implemented in a corresponding device. Likewise, it is appreciated that implementations of devices detailed herein are understood as capable of being implemented as a corresponding method. It is thus understood that a device corresponding to a method detailed herein may include one or more components configured to perform each aspect of the related method.

All acronyms defined in the above description additionally hold in all claims included herein.

## Claims

1. A device comprising:
a memory, comprising:
a first artificial neural network; and
a second artificial neural network; and
a processor, configured to:
implement the first artificial neural network to generate a first output based on a first input;
implement the second artificial neural network to generate second output based on a second input;
wherein the first input comprises or represents content of a website;
wherein the first output comprises a content category associated with the content of the website;
wherein the second input comprises the content category; and
wherein the second output is negatively correlated with the content category of the second input.

2. The device of claim 1, wherein the processor is further configured to cause sending of a request for website content from an address corresponding to the second output;
preferably wherein the processor is configured to omit or hide the website content from the address corresponding to the second output from a browser display.

3. The device of claim 0, wherein the website content is first website content; and wherein the processor is further configured to cause sending of a request for second website content that corresponds to a link within the first website content;
preferably wherein the first website content comprises a plurality of links; and wherein the processor is further configured to select the link from the plurality of links based on a content category of the second output.

4. The device of any one of claims 1 to 3, wherein the second output is a uniform resource locator (URL) that points to a website whose content is negatively correlated with the content category of the second input.

5. The device of any one of claims 2 to 4, further comprising a predefined duration; and wherein the processor is configured to cause sending of the request for the website content following expiration of the predefined duration.

6. The device of any one of claims 2 to 5, wherein the memory further contains data representing a user search practice, wherein the processor is configured to cause sending of the request for the website content in accordance with the user search practice.

7. The device of any one of claims 1 to 6, wherein the first input comprises an instruction to categorize the content of the website as the first output, based on any, or any combination of, topic, category, segment, country, or time.

8. The device of any one of claims 1 to 7, wherein the first output further comprises a value or qualifier associated with the content category; and wherein the second output being negatively correlated with the content category comprises the second output being negatively correlated with the value or qualifier.

9. The device of any one of claims 1 to 8, wherein the memory further comprises a user-specified privacy category;
wherein the first output comprises a plurality of content categories associated with the content of the website; and
wherein the processor is configured to select a content category of the plurality of content categories and to use the selected content category as the second input.

10. The device of any one of claims 1 to 9, wherein at least one of the first artificial neural network or the second artificial neural network is a large language model.

11. The device of any one of claims 1 to 10, wherein at least one of the first artificial neural network or the second artificial neural network is a small language model.

12. The device of any one of claims 1 to 11, wherein the first input further comprises an instruction to determine a content category based on contents of the website.

13. The device of any one of claims 1 to 12, wherein the second input further comprises an instruction to provide one or more websites that are negatively associated with the content category associated with the content of the website.

14. A non-transitory computer readable medium, comprising instructions which, if executed by a process, cause the processor to:
implement a first artificial neural network to generate a first output based on a first input;
implement a second artificial neural network to generate second output based on a second input;
wherein the first input comprises or represents content of a website;
wherein the first output comprises a content category associated with the content of the website;
wherein the second input comprises the content category; and
wherein the second output is negatively correlated with the content category of the second input:
preferably wherein the instructions are further configured to cause the processor to cause sending of a request for website content from an address corresponding to the second output.

15. The non-transitory computer readable medium of claim 14, wherein the instructions are further configured to cause the processor to omit displaying in a browser the website content from the address corresponding to the second output.
